# EUROPEAN PATENT APPLICATION

(11) **EP 4 131 563 A1**
(43) Date of publication of application: **08.02.2023**
(21) Application number: 20928542.8
(22) Date of filing: 22.12.2020
(51) Int. Cl.: H01M 10/44, H01M 50/20, H01M 50/342, H01M 50/50

(54) **POWER SOURCE DEVICE, AND VEHICLE AND POWER STORAGE DEVICE EACH EQUIPPED WITH SAME**

(30) Priority: 31.03.2020 JP 2020064060
(71) Applicant: SANYO Electric Co., Ltd., Daito-shi Osaka 574-8534 (JP)
(72) Inventor: INAMURA, Takashi, Osaka-shi, Osaka 540-6207 (JP)
(74) Representative: Novagraaf International SA
(86) International application number: PCT/JP2020/047898
(87) International publication number: WO 2021/199534

(57) **Abstract**

Power source device (100) includes: battery stack (10) including a plurality of battery cells (1) stacked; a plurality of bus bars (50) that connect electrode terminals (2) to each other; bus bar holder (41) that holds the plurality of bus bars (50); and duct plate (49) disposed on an upper surface of bus bar holder (41) and defining gas duct (43). Bus bar holder (41) is divided into a plurality of sub-holders (42), duct plate (49) forms elongated hole (b) screwed with one of the plurality of sub-holders (42), each of the plurality of sub-holders (42) forms support surface (61) longer than elongated hole (49b) and coupling part (63) opened in support surface (61) at a position corresponding to elongated hole (49b), and duct plate (49) is screwed to coupling part (63) through elongated hole (49b) to couple the plurality of sub-holders (42) and duct plate (49) in a state where duct plate (49) is placed on support surface (61) with duct plate (49) straddling the plurality of sub-holders divided (42).

## Description

### TECHNICAL FIELD

The present disclosure relates to a power source device, and a vehicle and a power storage device that are equipped with the power source device.

### BACKGROUND ART

A power source device such as a battery module or a battery pack including a plurality of battery cells is used for a power source for a vehicle such as a hybrid automobile or an electric automobile, a power source of a power storage system for a factory, a home, or the like (e.g., refer to PTLs 1 to 3).

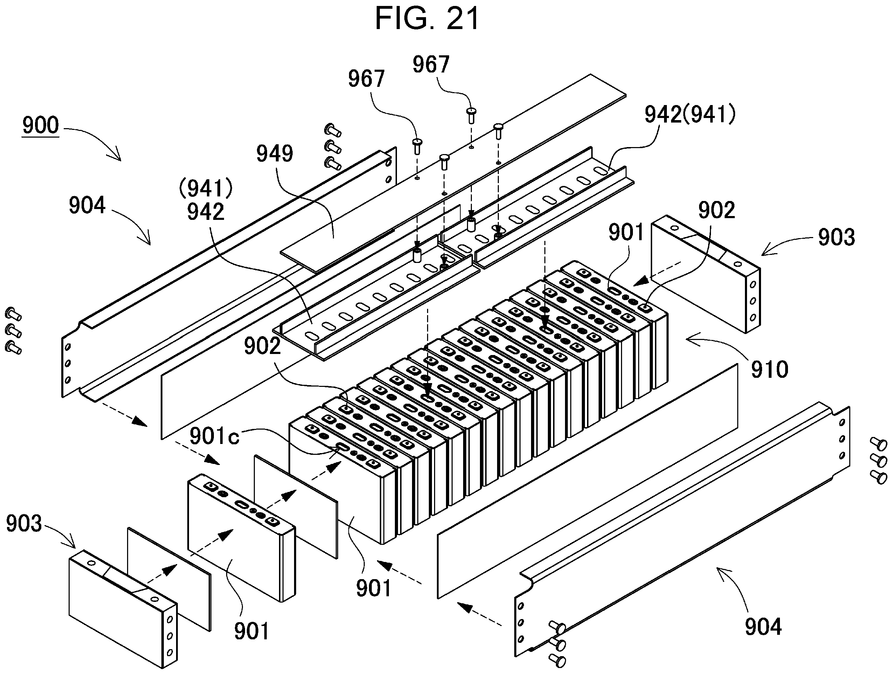

In such a power source device, a plurality of chargeable and rechargeable battery cells are stacked. For example, as shown in a schematic sectional view of Fig. 21, power source device 900 has end plates 903 on both end surfaces of battery stack 910 obtained by stacking battery cells 901 having prismatic outer covering can. End plates 903 are fastened to each other with bind bars 904. In prismatic battery cell 901, positive and negative electrode terminals 902 are provided on the upper surface thereof to be separated from each other. Electrode terminals 902 of adjacent battery cells 901 are connected by a bus bar. Generally, the bus bar is held in a positioning state by bus bar holder 941. Such bus bar holder 941 is made of resin such as polypropylene.

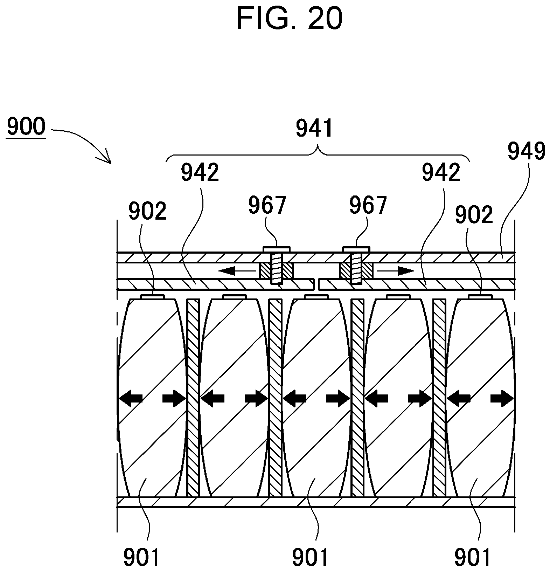

Further, battery cell 901 is provided with gas discharge valve 901c that opens to discharge gas when the inside of the outer covering can has a high pressure at the time of abnormality. Gas discharge valve 901c is formed, for example, between positive and negative electrode terminals 902 on the upper surface of the outer covering can of battery cell 901. In power source device 900 in which a large number of such battery cells 901 are stacked, when any of the battery cells has a high internal pressure for some reason such as thermal runaway, a high-temperature and high-pressure gas is discharged from gas discharge valve 901c. Therefore, a gas duct is provided above battery stack 910. The gas duct is formed by screwing duct plate 949 on the upper surface of bus bar holder 941 in Fig. 20, for example.

The outer covering can of the battery cell expands and contracts when charged and discharged repeatedly. In particular, with the recent demand for higher capacity, the capacity of each secondary battery cell is increasing. As a result, the amount of expansion tends to increase. In a battery stack in which a large number of such secondary battery cells are stacked and fastened, since mutual positional displacement occurs between adjacent battery cells due to expansion of each battery cell, it is necessary for bus bar holder 941 to absorb the positional displacement between the electrode terminals. For example, a stretchable structure is formed using a resin hinge, a spring, or the like to absorb positional displacement between electrode terminals. In order to form such resin hinges and springs, the bus bar holder needs to be formed of a flexible resin such as polypropylene as described above.

On the other hand, a gas duct is formed above the battery stack in order to safely discharge gas jetted when a cell is internally short-circuited due to an increase in capacity of the battery cell. As illustrated in Fig. 20, the gas duct is formed by fixing duct plate 949 to the upper surface of bus bar holder 941.

However, as described above, bus bar holder 941 is required to have flexibility capable of absorbing the expansion of battery cells 901, whereas duct plate 949 needs to be firmly fixed to bus bar holder 941 made of resin with bolts 967 so as not to be detached even when exposed to a high gas pressure, and high rigidity is required. As described above, bus bar holder 941 is required to have contradictory characteristics such as flexibility against deformation and resistance against high pressure, and it has been difficult to achieve both of them.

### Citation List

### Patent Literature

PTL 1: Japanese Publication Examined Patent Applicant No. 6344362
PTL 2: Japanese Publication Examined Patent Applicant No. 6465196
PTL 3: Japanese Publication Examined Patent Applicant No. 5668555

### SUMMARY OF THE INVENTION

### Technical problem

An object of an aspect of the present invention is to provide a power source device capable of coping with a situation in which the entire length of a battery stack in which a plurality of battery cells are stacked expands and contracts, and a vehicle and a power storage device including the power source device.

### Solution to problem

A power source device according to an aspect of the present invention includes: a battery stack including a plurality of battery cells stacked, each of the plurality of battery cells including a gas discharge valve that opens when an internal pressure of an outer covering can increases and an electrode terminal formed on an upper surface of a respective one of the plurality of battery cells; a plurality of bus bars that connect a plurality of the electrode terminal to each other; a bus bar holder that holds the plurality of bus bars; and a duct plate disposed on an upper surface of the bus bar holder and defining a gas duct, wherein the bus bar holder is divided into a plurality of sub-holders, the duct plate forms an elongated hole coupled to one of the plurality of sub-holders, each of the plurality of sub-holders forms a support surface longer than the elongated hole and a coupling part opened in the support surface at a position corresponding to the elongated hole, and the duct plate is screwed to the coupling part through the elongated hole to couple the plurality of sub-holders and the duct plate in a state where the duct plate is placed on the support surface with the duct plate straddling the plurality of sub-holders divided.

### Advantageous effect of invention

According to a power source device according to an aspect of the present invention, the bus bar holder is divided into a plurality of parts, and is slidably fixed to a duct plate that does not expand or contract while being capable of absorbing expansion and contraction of the battery cells in the stacking direction, whereby the connection state can be maintained.

### BRIEF DESCRIPTION OF THE DRAWINGS

Fig. 1 is a perspective view illustrating a power source device with an enlarged view of a main part according to a first exemplary embodiment of the present invention.
Fig. 2 is an exploded perspective view of the power source device shown in Fig. 1.
Fig. 3 is an exploded perspective view in which a bus bar holder and a duct plate are separated in a cover assembly of Fig. 2.
Fig. 4 is an exploded perspective view in which bus bars are separated from the bus bar holder of Fig. 3.
Fig. 5 is an exploded perspective view in which the bus bar holder of Fig. 4 is divided into sub-holders.
Fig. 6 is a plan view of the cover assembly of Fig. 2.
Fig. 7 is a plan view with an enlarged view of a main part illustrating the bus bar holder excluding the duct plate in Fig. 6.
Fig. 8 is a plan view with an enlarged view of a main part illustrating the bus bar holder excluding the bus bars in Fig. 7.
Fig. 9 is a plan view with an enlarged view of a main part obtained by dividing the bus bar holder of Fig. 8 into sub-holders.
Fig. 10 is a schematic cross-sectional view taken along line X-X in Fig. 6.
Fig. 11 is an enlarged exploded perspective view of a main part of the bus bar holder.
Fig. 12 is a schematic cross-sectional view illustrating a coupling structure between a duct plate and a sub-holder according to a modified example.
Fig. 13A is a schematic cross-sectional view illustrating a coupling structure between a duct plate and a sub-holder according to another modified example.
Fig. 13B is a schematic cross-sectional view illustrating a state in which the coupling part is thermally staked from the state of Fig. 13A.
Fig. 14A is a plan view illustrating a bush nut used for connecting a duct plate and a sub-holder according to still another modified example.
Fig. 14B is a schematic cross-sectional view illustrating a coupling structure between the duct plate and the sub-holder in Fig. 14A.
Fig. 15 is a schematic cross-sectional view illustrating a coupling structure between a duct plate and a sub-holder according to still another modified example.
Fig. 16 is a plan view illustrating a bus bar holder of a power source device according to a second exemplary embodiment.
Fig. 17 is a block diagram illustrating an example in which the power source device is mounted on a hybrid vehicle that travels with an engine and a motor.
Fig. 18 is a block diagram illustrating an example in which the power source device is mounted on an electric automobile that travels only with a motor.
Fig. 19 is a block diagram illustrating an example of applying a power source device for power storage.
Fig. 20 is a schematic plan view illustrating a conventional power source device.
Fig. 21 is an exploded perspective view of a conventional power source device.

### DESCRIPTION OF EMBODIMENTS

Exemplary embodiments of the present invention may be specified by the following configurations.

In a power source device according to an exemplary embodiment of the present invention, in addition to the above configuration, the sub-holder forms a boss in the gas duct, and forms the support surface on an upper surface of the boss.

In a power source device according to another exemplary embodiment of the present invention, in addition to any one of the above configurations, an annular frame to be inserted into the elongated hole protrudes around the coupling part of the support surface. With the above configuration, the annular frame can be inserted into the elongated hole to function as a guide for sliding a connecting part along the elongated hole.

Further, in a power source device according to another exemplary embodiment of the present invention, in addition to any of the configurations described above, an insert nut is embedded in the boss.

Furthermore, in a power source device according to another exemplary embodiment of the present invention, in addition to any of the configurations described above, the support surface is formed in a track shape.

Furthermore, in a power source device according to another exemplary embodiment of the present invention, in addition to any of the configurations described above, an interface in which the sub-holders face each other is formed in a stepwise shape in a plan view.

Furthermore, in a power source device according to another exemplary embodiment of the present invention, in addition to any of the configurations described above, the bus bar holder forms an overlapping part that extends from one of opposing surfaces where the sub-holders face each other toward the other opposing surface and closes a gap between the sub-holders. With the above configuration, even if the gas is discharged from the gas discharge valve of any one of the battery cells through the gap generated by dividing the bus bar holder into the sub-holders, the situation in which the gas leaks from the gap can be suppressed by the overlapping part.

Furthermore, in a power source device according to another exemplary embodiment of the present invention, in addition to any of the configurations described above, the bus bar includes a bus bar main body extended in a prismatic shape, and a bus bar branch part extended from the bus bar main body and connected to the electrode terminal.

Furthermore, in a power source device according to another exemplary embodiment of the present invention, in addition to any of the configurations described above, the bus bar holder is formed of PBT.

Furthermore, in a power source device according to another exemplary embodiment of the present invention, in addition to any of the configurations described above, the duct plate is made of SUS or iron.

Furthermore, an electric vehicle according to another exemplary embodiment of the present invention includes any of the above power source devices, a motor for traveling to which the power source device supplies electric power, a vehicle body equipped with the power source device and the motor, and a wheel driven by the motor to cause the vehicle body to travel.

Further, a power storage device according to another exemplary embodiment of the present invention includes any of the above power source devices and a power supply controller that controls charging and discharging of the power source device, wherein the power supply controller enables charging of the plurality of battery cells with electric power from outside, and controls charging to be performed on the plurality of battery cells.

Hereinafter, exemplary embodiments of the present invention will be described with reference to the drawings. However, the exemplary embodiments described below are examples for embodying the technical idea of the present invention, and the present invention is not limited to the following. In the present specification, members indicated in the claims are not limited to the members of the exemplary embodiments. In particular, the dimensions, materials, shapes, and the relative arrangement of the constituent members described in the exemplary embodiments are not intended to limit the scope of the present invention only thereto unless otherwise specified and are merely illustrative examples. The sizes and positional relationships of the members shown in the drawings may be exaggerated for clarity of description. In the following description, the same names and reference marks indicate the same or similar members, and detailed description will be appropriately omitted. The elements constituting the present invention may be configured such that the plurality of elements are constituted of the same members to form one member that functions as a plurality of elements, or conversely, the function of one member can be shared and achieved by a plurality of members. Additionally, part of contents described in an exemplary embodiments and an example may be applied in other exemplary embodiments and examples.

A power source device according to an exemplary embodiment is used for various applications such as a power source that is mounted on an electric vehicle such as a hybrid vehicle or an electric automobile and supplies electric power to a traveling motor, a power source that stores generated electric power of natural energy such as photovoltaic power generation or wind power generation, and a power source that stores midnight electric power, and is particularly used as a power source suitable for high-power and high-current applications. In the following example, the exemplary embodiments applied to a power source device for driving an electric vehicle will be described.

### [First exemplary embodiment]

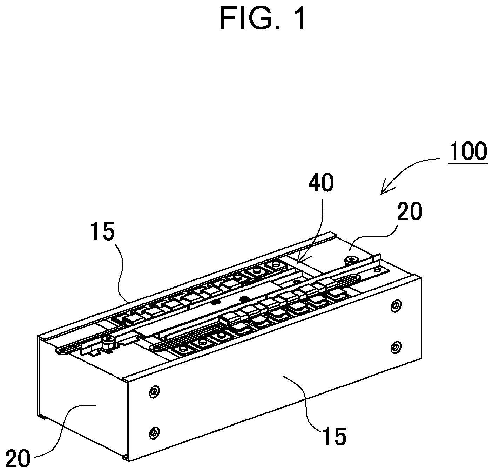

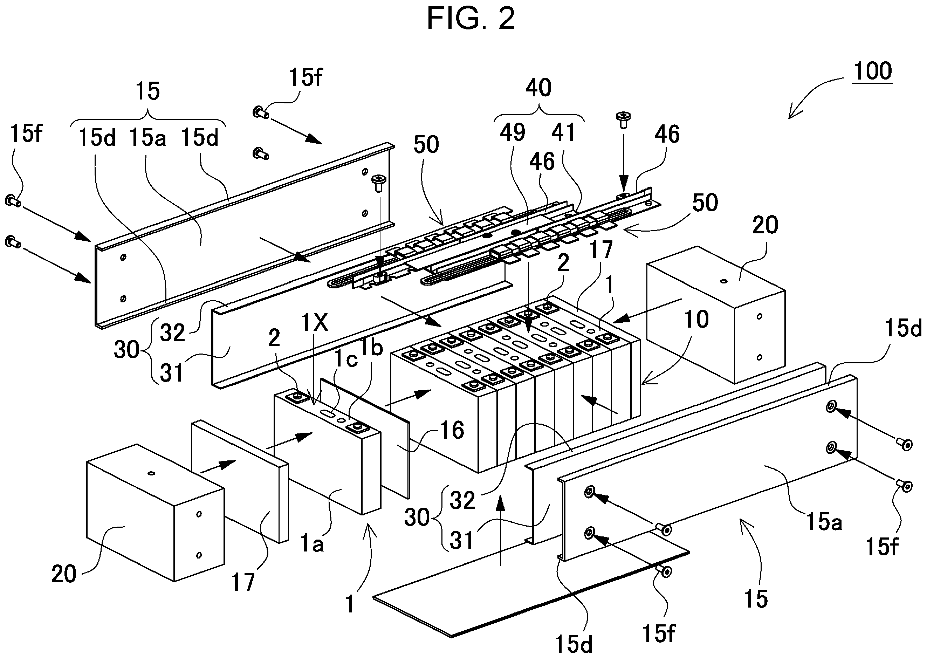

Power source device 100 according to a first exemplary embodiment of the present invention is shown in Figs. 1 to 2. In these drawings, Fig. 1 is an exploded perspective view with an enlarged view of a main part of power source device 100 according to the first embodiment, and Fig. 2 is an exploded perspective view of power source device 100 illustrated in Fig. 1.

Power source device 100 shown in these drawings includes battery stack 10 in which a plurality of battery cells 1 are stacked, a pair of end plates 20 covering both side end surfaces of battery stack 10, a plurality of fastening members 15 for fastening end plates 20 to each other, and cover assembly 40 provided on an upper surface of battery stack 10.

Fastening members 15 are each formed into a plate shape extending in a stacking direction of the plurality of battery cells 1. Fastening members 15 are disposed on opposite side surfaces of battery stack 10 to fasten end plates 20 to each other.

### (Battery stack 10)

As shown in Figs. 2, battery stack 10 includes a plurality of battery cells 1 each including positive and negative electrode terminals 2, and bus bars 50 connected to electrode terminals 2 of the plurality of battery cells 1 to connect the plurality of battery cells 1 in parallel and in series. The plurality of battery cells 1 are connected in parallel or in series through bus bars 50. Battery cell 1 is a chargeable and dischargeable secondary battery. Power source device 100 includes battery cells 1 that are connected in parallel to form a parallel battery group, and parallel battery groups are connected in series to allow many battery cells 1 to be connected in parallel and in series. In power source device 100 illustrated in Fig. 2, the plurality of battery cells 1 are stacked to form battery stack 10. The pair of end plates 20 are disposed on both end surfaces of battery stack 10. End parts of fastening members 15 are fixed to end plates 20 to fix stacked battery cells 1 to a pressurized state.

### (Battery cell 1)

As shown in Fig. 2, each of battery cells 1 has a width greater than the thickness, in other words, has a thickness smaller than the width. Prismatic battery cells 1 are stacked in the thickness to form battery stack 10. Battery cell 1 can be, for example, a lithium ion secondary battery. The battery cell can be any chargeable secondary battery such as a nickel hydride battery and a nickel cadmium battery. Battery cell 1 houses positive and negative electrode plates in outer covering can 1a having a sealed structure together with an electrolytic solution. Outer covering can 1a includes a metal sheet such as aluminum or an aluminum alloy press-molded into a prismatic shape, and has an opening part that is hermetically sealed with sealing plate 1b. Sealing plate 1b is made of the aluminum or an aluminum alloy same as prismatic outer covering can 1a, and positive and negative electrode terminals 2 are fixed to both end parts of sealing plate 1b. Sealing plate 1b is provided with, between positive and negative electrode terminals 2, gas discharge valve 1c, which is a safety valve that opens in response to an internal pressure change of each of battery cells 1.

The plurality of battery cells 1 are stacked to allow the thickness of each battery cell 1 to be aligned with the stacking direction to constitute battery stack 10. At this time, by providing more stacks than usual, it is possible to increase output of battery stack 10. In such a case, battery stack 10 becomes long and extended in the stacking direction. Terminal surfaces 1X provided with positive and negative electrode terminals 2 are arranged on the same plane, and thus the plurality of battery cells 1 are stacked to constitute battery stack 10. The upper surface of battery stack 10 is a surface provided with gas discharge valves 1c of the plurality of battery cells 1.

### (Electrode terminal 2)

In battery cell 1, as shown in Fig. 2 and the like, sealing plate 1b being a top surface serves as terminal surface 1X, and positive and negative electrode terminals 2 are fixed to both end parts of terminal surface 1X. Electrode terminal 2 has a protrusion having a circular columnar shape. However, the protrusion is not necessarily in a circular columnar shape and may be in a polygonal columnar shape or an elliptic columnar shape.

Positive and negative electrode terminals 2 fixed to sealing plate 1b of the battery cell 1 are positioned where the positive electrode and the negative electrode are bilaterally symmetrical. This enables adjacent battery cells 1 to be connected in series by stacking battery cells 1 in an alternately and horizontally reversed manner and connecting electrode terminals 2 of the positive electrode and the negative electrode that are adjacent and close to each other by bus bars 50, as shown in Fig. 2. Note that the present invention does not specify the number and connection state of the battery cells constituting the battery stack. The number and connection state of the battery cells constituting the battery stack may be modified in various manners, inclusive of other exemplary embodiments described later.

The plurality of battery cells 1 are stacked to allow the thickness of each battery cell 1 to be aligned with the stacking direction to constitute battery stack 10. In battery stack 10, the plurality of battery cells 1 are stacked such that terminal surfaces 1X on which positive and negative electrode terminals 2 are provided, or sealing plates 1b in Fig. 2, are flush with each other.

In battery stack 10, insulating spacer 16 may be interposed between battery cells 1 stacked adjacently to each other. Insulating spacer 16 is made of an insulating material such as resin in the form of a thin plate or sheet. Insulating spacer 16 is formed to have a plate shape that is substantially equal in size to an opposed face of battery cell 1. Such insulating spacer 16 can be stacked between battery cells 1 adjacent to each other to insulate the adjacent battery cells 1 from each other. As a spacer arranged between adjacent battery cells, it is possible to use a spacer having a shape that allows a flow path through which a cooling gas flows to be formed between the battery cell and the spacer. It is also possible to cover a surface of the battery cell with an insulating material. For example, the surface of the outer covering can except for the electrode terminal parts of the battery cell may be covered with a shrink film such as a polyethylene terephthalate (PET) resin. In this case, the insulating spacer may be omitted. Although a power source device including battery cells connected in parallel and series includes an insulating spacer interposed between the battery cells connected in series, the insulating spacer between the battery cells connected in parallel can be eliminated because no voltage difference occurs between adjacent outer covering cans.

Power source device 100 illustrated in Fig. 2 includes end plates 20 disposed on both end surfaces of battery stack 10. Between each of end plates 20 and battery stack 10, end surface spacer 17 may be interposed to insulate them. End surface spacer 17 can also be formed in the form of a thin plate or sheet with an insulating material such as resin.

In power source device 100 according to the first exemplary embodiment, in battery stack 10 in which the plurality of battery cells 1 are stacked on each other, electrode terminals 2 of the plurality of battery cells 1 adjacent to each other are connected by the bus bars 50 to connect the plurality of battery cells 1 in parallel and in series.

### (End plate 20)

As shown in Fig. 2, end plates 20 are disposed at both ends of battery stack 10 and fastened with each other via a pair of right and left fastening members 15 that are disposed along both side faces of battery stack 10. End plates 20 are both ends of battery stack 10 in the stacking direction of battery cells 1 and are disposed outside end surface spacers 17 to sandwich battery stack 10 from both ends.

### (Fastening member 15)

Fastening member 15 has both ends fixed to end plates 20 disposed on both end surfaces of battery stack 10. End plates 20 are fixed by a plurality of fastening members 15 to fasten battery stack 10 in the stacking direction. As illustrated in Fig. 2 and the like, each of fastening members 15 is made of metal having a predetermined width and a predetermined thickness along the side surface of battery stack 10, and is disposed opposite to both side surfaces of battery stack 10. A metal sheet of iron or the like, preferably a steel sheet, can be used as fastening member 15. Fastening member 15 made of a metal sheet is bent by press molding or the like to form a predetermined shape.

Fastening member 15 has an upper and lower parts of plate-shaped fastening main surface 15a bent in a U-shape to form bent pieces 15d. Upper and lower bent pieces 15d cover upper and lower surfaces of battery stack 10 from the corners on the left and right side surfaces of battery stack 10. Fastening member 15 is fixed to an outer peripheral surface of end plate 20 by screwing bolts 15f into a plurality of fastening screw holes opened in fastening main surface 15a. Fastening main surface 15a and end plate 20 are not necessarily fixed by screwing with bolts, and may be fixed with, for example, pins or rivets.

Power source device 100 having a large number of battery cells 1 stacked is configured such that the plurality of battery cells 1 are constrained by connecting end plates 20 arranged at both ends of battery stack 10 including the plurality of battery cells 1 by means of fastening members 15. By constraining the plurality of battery cells 1 via end plates 20 and fastening members 15 that have high rigidity, it is possible to suppress malfunction or other faults caused by swelling, deformation, relative displacement, or vibration of battery cells 1 due to charging and discharging or degradation.

### (Insulating sheet 30)

Insulating sheet 30 is interposed between fastening member 15 and battery stack 10. Insulating sheet 30 is made of a material having an insulating property, such as resin, and insulates metal-made fastening member 15 from battery cell 1. Insulating sheet 30 illustrated in Fig. 2 and the like includes flat plate 31 for covering the side surface of battery stack 10, and bent covers 32 provided on an upper part and a lower part of flat plate 31. Bent covers 32 are each bent from flat plate 31 in a U-shape so as to cover bent pieces 15d of fastening member 15. As a result, bent pieces 15d are covered with the insulating bent covers from an upper surface to a side surface and a lower surface. This can avoid unintended conduction between battery cell 1 and fastening member 15.

Bent pieces 15d press the upper surface and the lower surface of battery cells 1 of battery stack 10 via bent covers 32. As a result, each battery cell 1 is pressed by bent pieces 15d from the upper and lower sides and held in the height direction, and even when vibration, impact, or the like is applied to battery stack 10, each battery cell 1 can be maintained so as not to be displaced in the up-down direction.

The insulating sheet is unnecessary in a case where the battery stack or a surface of the battery stack is insulated, for example, in a case where the battery cell is housed in an insulating case or covered with a heat-shrinkable film made of a resin, or in a case where an insulating paint or coating is applied to a surface of the fastening member, or in a case where the fastening member is made of an insulating material. Insulating sheet 30 may also have bent cover 32 formed only on an upper end when insulation from bent piece 15d of fastening member 15 does not need to be taken into consideration on the lower surface of battery stack 10. This corresponds to, for example, a case where battery cell is covered with a heat-shrinkable film.

### (Bus bar holder 41)

Bus bar 50 is held by bus bar holder 41. Bus bar holder 41 is fixed to the upper surface of battery stack 10. Use of bus bar holder 41 makes it possible to dispose the plurality of bus bars 50 at fixed positions on the upper surface of battery stack 10 while insulating the plurality of bus bars 50 from each other and insulating terminal surfaces 1X of battery cells 1 from bus bars 50.

### (Cover assembly 40)

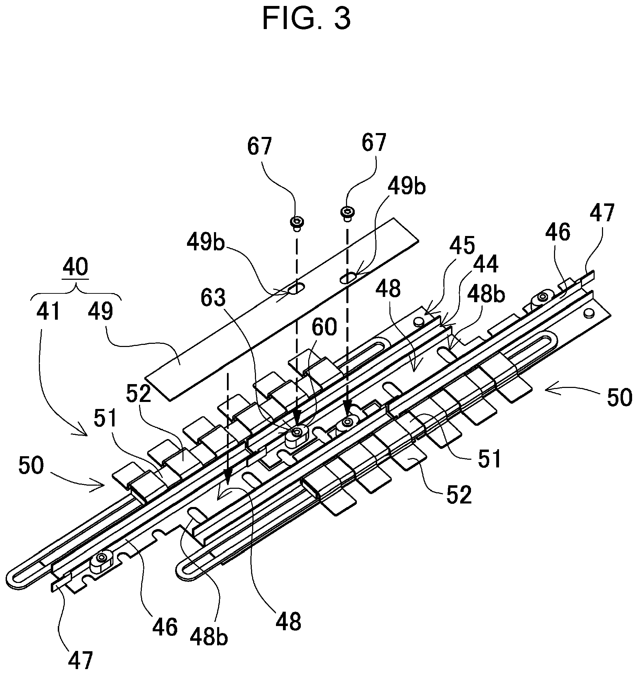

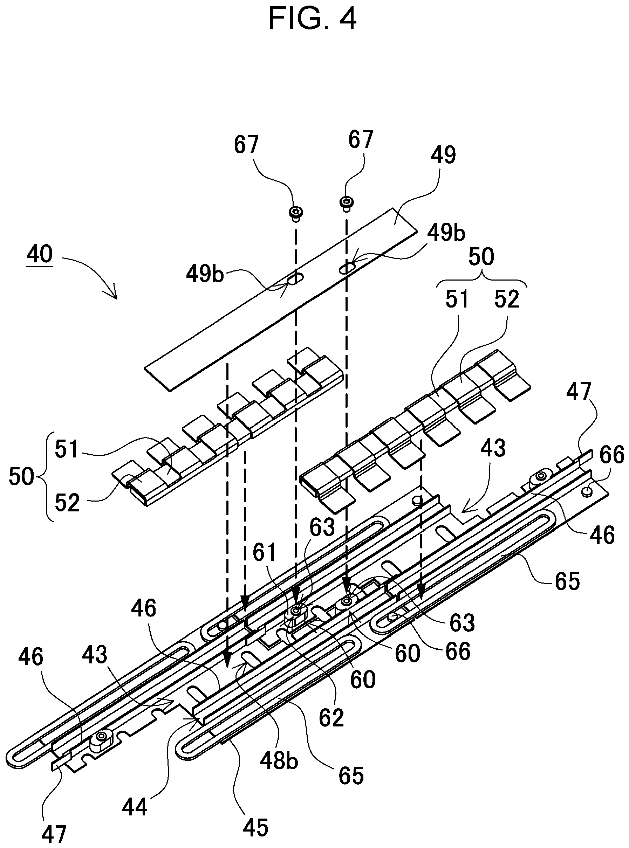

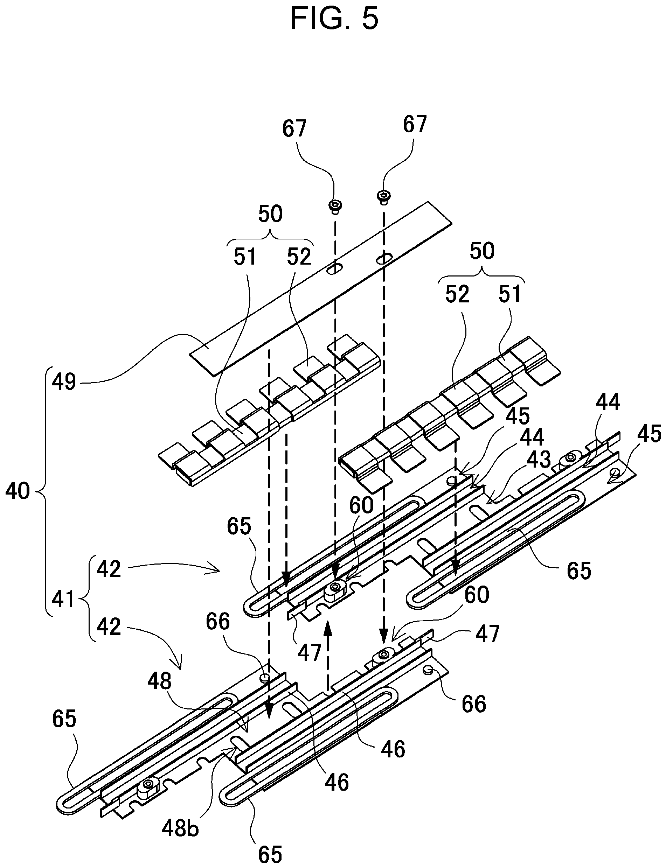

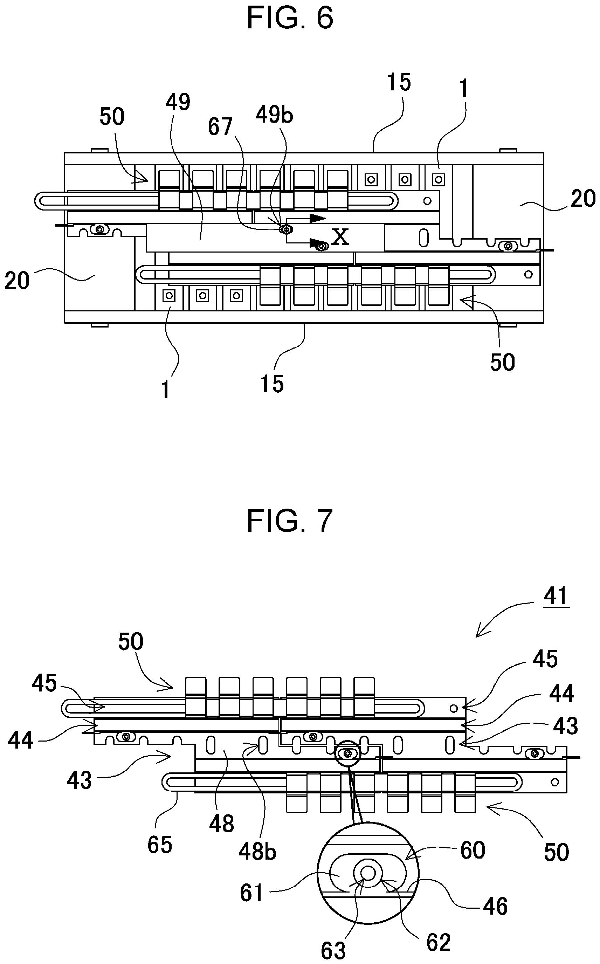

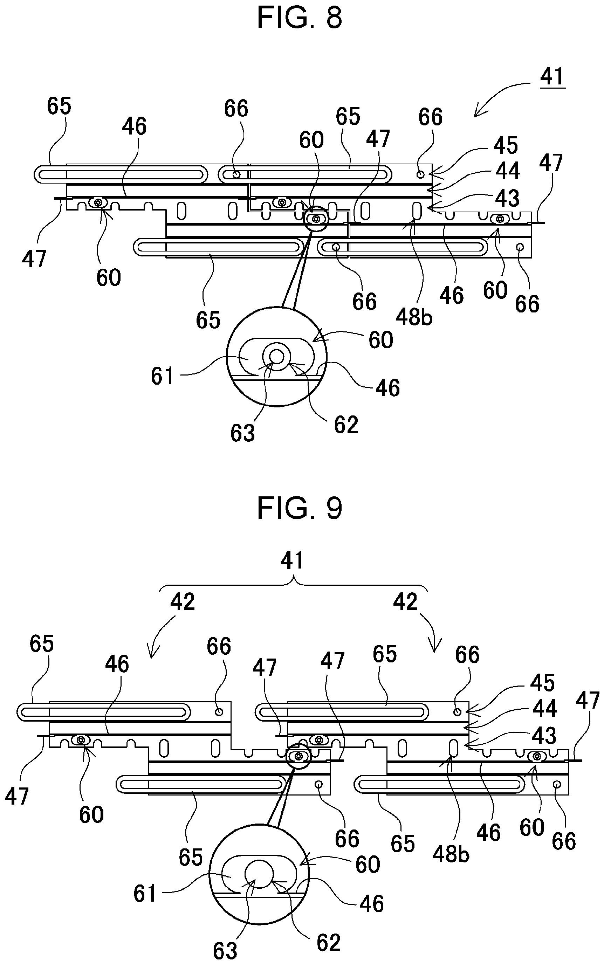

Cover assembly 40 shown in Fig. 2 includes bus bar holder 41 and duct plate 49. In cover assembly 40 of Fig. 2, an exploded perspective view in which bus bar holder 41 and duct plate 49 are separated is illustrated in Fig. 3, a state in which bus bar 50 is further separated from bus bar holder 41 of Fig. 3 is illustrated in Fig. 4, and a state in which bus bar holder 41 of Fig. 4 is divided into sub-holders 42 is illustrated in Fig. 5. Fig. 6 is a plan view of cover assembly 40 of Fig. 2, Fig. 7 is a plan view of bus bar holder 41 excluding duct plate 49 in Fig. 6, Fig. 8 is a plan view of bus bar holder 41 excluding bus bar 50 in Fig. 7, and Fig. 9 is a plan view of bus bar holder 41 of Fig. 8 divided into sub-holders 42.

### (Bus bar 50)

As illustrated in exploded perspective views of Figs. 4 and 5, bus bar 50 includes bus bar main body 51 and bus bar branch parts 52 extending from bus bar main body 51 and connected to electrode terminals 2. Bus bar main body 51 has a shape extended in a prismatic shape, and fixes bus bar branch parts 52 at predetermined intervals in the extension direction. Bus bar main body 51 is a metal rod body having excellent conductivity. Preferably, bus bar branch parts 52 are made of the same material, for example, copper or aluminum. The electrical conductivity can be improved by increasing the cross-sectional area as a prismatic shape. In addition, the height is suppressed by forming a rectangular shape instead of a square shape, and an increase in size of the power source device is avoided.

Bus bar branch parts 52 are made by cutting and processing metal sheets to have predetermined shapes. Here, the bus bar branch parts are bent in a stepwise shape along the surface of prismatic bus bar main body 51. As a result, the contact area between bus bar branch parts 52 and bus bar main body 51 can be increased to reduce the contact resistance and maintain high conductivity. In addition, by projecting bus bar branch parts 52 from the side surface of bus bar main body 51, bus bar branch parts 52 are easily brought into contact with electrode terminals 2 of battery cells 1, and workability of welding work can be improved.

For the metal sheets forming bus bar branch parts 52, metal having a low electrical resistance and being lightweight can be used, such as aluminum plate or copper plate, or an alloy thereof. However, the metal sheets for bus bar branch parts 52 may be a sheet of any of other lightweight metals that have low electrical resistance or a sheet of an alloy of these metals.

Note that bus bar 50 illustrated in Figs. 4 and 5 is an example, and may not necessarily be configured by bus bar main body 51 and bus bar branches 52. Typically, a bus bar made of a single plate material or the like is employed.

### (Gas duct 43)

Cover assembly 40 constitutes a gas discharge path, that is, gas duct 43, for discharging a high-temperature and high-pressure gas to the outside of power source device 100 when the gas is discharged from any of battery cells 1 constituting battery stack 10. In bus bar holder 41, as illustrated in the exploded perspective view of Fig. 3, gas duct 43 is formed at the center in the extending direction, and bus bars 50 are disposed on the left and right sides. With such an arrangement, a gas discharge path can be secured while bus bars 50 connecting the electrode terminals is disposed on the upper surface of battery stack 10. In the example illustrated in Fig. 6, bus bar holder 41 defines gas duct 43 by forming a pair of wall parts 46 at the center. Wire passing part 44 for arranging harnesses such as output lines or signal lines of the circuit board is provided outside gas duct 43. Further, bus bar guide part 45 in which bus bar 50 is disposed is formed outside wire passing part 44. Bus bar holder 41 is made of resin having excellent insulation properties. For example, it is made of polybutylene terephthalate (PBT).

Wall parts 46 define gas duct 43 by duct surface 48 of bus bar holder 41 sandwiched between wall parts 46 and duct plate 49 closing the upper surface, and define a gas discharge path for preventing the gas from flowing into another part and safely discharging the gas to the outside. A plurality of gas introduction ports 48b are formed on duct surface 48 of bus bar holder 41. Gas introduction ports 48b is formed at a position corresponding to gas discharge valve 1c of each battery cell 1 of battery stack 10.

A plurality of baffle plates may be provided on duct surface 48 of bus bar holder 41. The baffle plates extend the discharge path of the gas discharged to gas duct 43 to reduce the pressure, and reduces the temperature to safely discharge the gas.

### (Duct plate 49)

Further, duct plate 49 is fixed to bus bar holder 41. As illustrated in the exploded perspective view of Fig. 3, gas duct 43 is defined by left and right wall parts 46, duct surface 48 on the floor surface, and duct plate 49 on the top surface. Duct plate 49 is preferably a metal sheet made of sheet metal or the like in order to increase rigidity. For example, the duct plate is made of SUS or iron. Alternatively, similarly to bus bar holder 41, duct plate 49 may be made of insulating resin made of PBT.

### (Sub-holder 42)

Further, bus bar holder 41 is divided into a plurality of sub-holders 42 as illustrated in Figs. 5 and 7. As a result, as shown in the plan views of Figs. 8 and 9, even if the battery cells expand and the overall length of battery stack 10 changes, this can be absorbed.

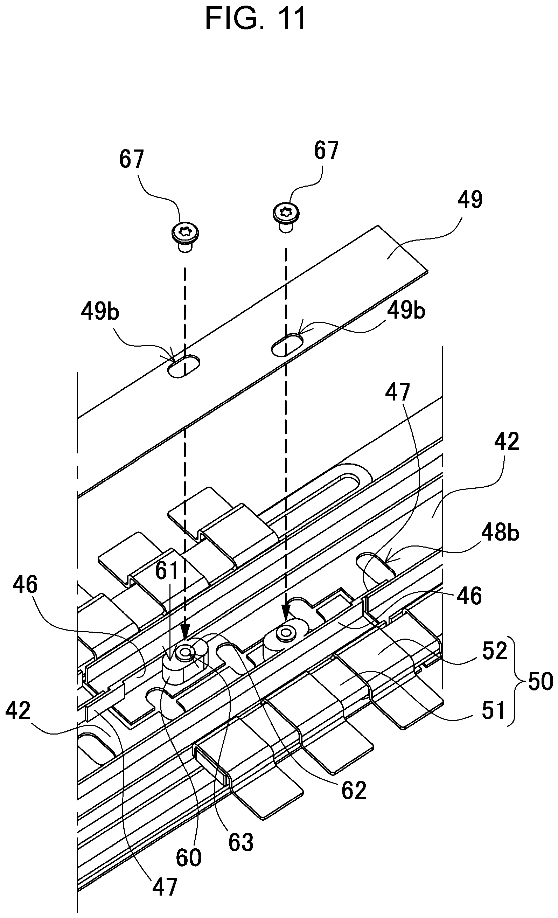

As in power source device 900 illustrated in Fig. 20, when duct plate 949 is directly fixed to the upper surface of sub-holder 942 obtained by dividing bus bar holder 941 with bolts 967, bus bar holder 941 is pulled by duct plate 949, and the expansion and contraction structure of bus bar holder 941 which is divided into sub-holders 942 and absorbs the expansion or contraction of battery stack 910 does not function. Therefore, a fixing structure between the duct plate and the bus bar holder is devised so that the expansion and contraction function of the bus bar holder is not impaired even when the duct plate is attached to the bus bar holder. Specifically, as illustrated in an enlarged exploded perspective view of a main part of Fig. 11, duct plate 49 forms elongated holes 49b screwed to sub-holder 42 with bolts 67. In addition, each sub-holder 42 forms support surface 61 longer than elongated hole 49b at a position corresponding to elongated hole 49b. A screw hole is opened as coupling part 63 in support surface 61. Sub-holder 42 forms boss 60 in gas duct 43. Boss 60 has a top surface in a track shape, and the top surface is support surface 61.

Then, in a state where duct plate 49 is placed on support surface 61 so as to straddle the plurality of divided sub-holders 42, bolts 67 are screwed into screw holes 63 as the coupling parts through elongated holes 49b to connect the plurality of sub-holders 42 and duct plate 49. With such a configuration, bus bar holder 41 can be divided into a plurality of parts to absorb expansion and contraction of the battery cells in the stacking direction, and the bus bar holder can be slidably fixed to duct plate 49 that does not expand or contract, so that the connection state can be maintained.

Boss 60 has top support surface 61 in a track shape. Coupling part 63 is formed at the center of support surface 61. Annular frame 62 to be inserted into elongated hole 49b preferably protrudes around coupling part 63. With such a configuration, annular frame 62 can be inserted into elongated hole 49b to function as a guide for sliding the screwed part along elongated hole 49b.

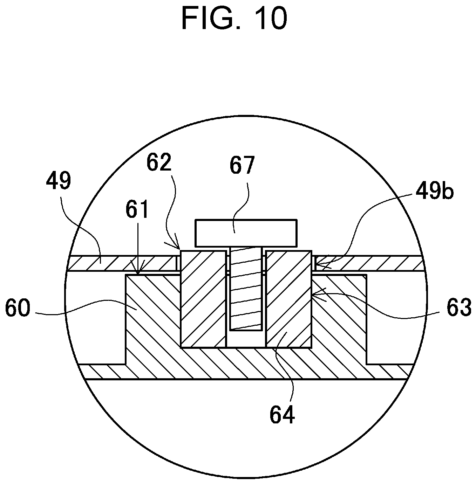

In the example illustrated in the schematic cross-sectional view of Fig. 10, insert nut 64 into which bolt 67 is screwed is embedded in boss 60. The upper surface of insert nut 64 protrudes from support surface 61 to form annular frame 62. In addition, boss 60 is preferably provided integrally with wall parts 46 as illustrated in Figs. 3, 4, 11, and the like. Accordingly, the effect of increasing the strength of wall parts 46 can also be obtained by boss 60.

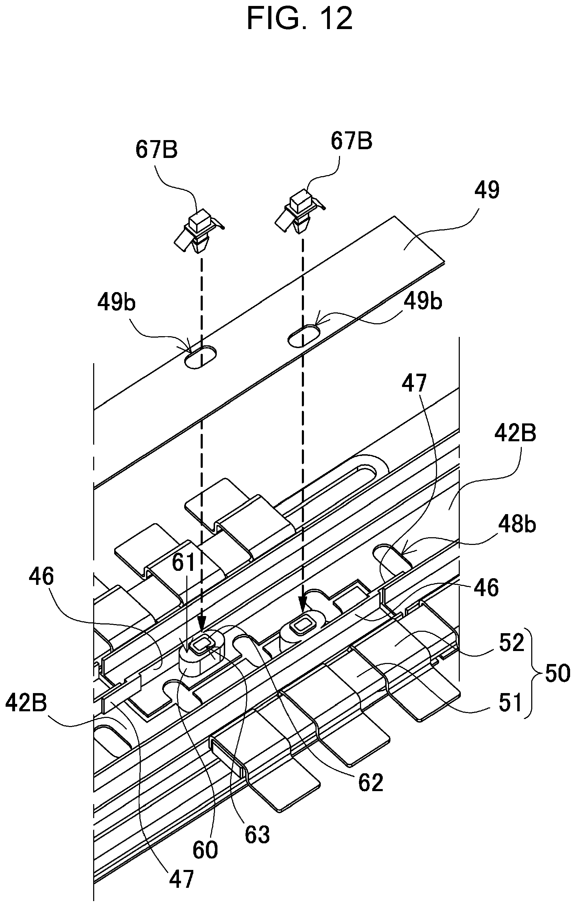

In the above example, the connection between duct plate 49 and sub-holders 42 is configured such that bolts 67 are screwed into elongated holes 49b and the screw holes which are coupling parts 63. However, in the present invention, the coupling between duct plate 49 and sub-holders 42 is not limited to the screwing, and a known configuration in which the duct plate is coupled to the sub-holders in a mode allowing some displacement can be appropriately adopted. For example, as illustrated in the exploded perspective view of Fig. 12, anchors 67B each having an arrowhead at the tip are used instead of the bolts to be inserted into elongated holes 49b of duct plate 49 and coupling parts 63B of sub-holders 42B. Coupling parts 63 are openings capable of press-fitting the arrowheads of anchors 67B instead of the screw holes.

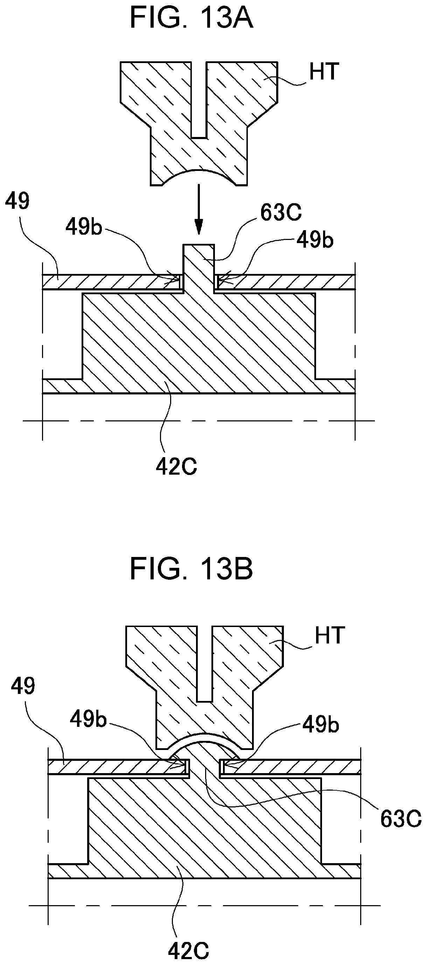

Alternatively, connection by swaging may be used. For example, as illustrated in the cross-sectional view of Fig. 13A, boss made of resin protrudes as coupling part 63C of sub-holder 42C, is inserted into elongated hole 49b of duct plate 49 from the lower surface side, and then the distal end surface of the boss is heated and pressed by heater HT or the like to be crushed, whereby the distal end of the boss can be made larger than elongated hole 49b and connection is made as illustrated in Fig. 13B.

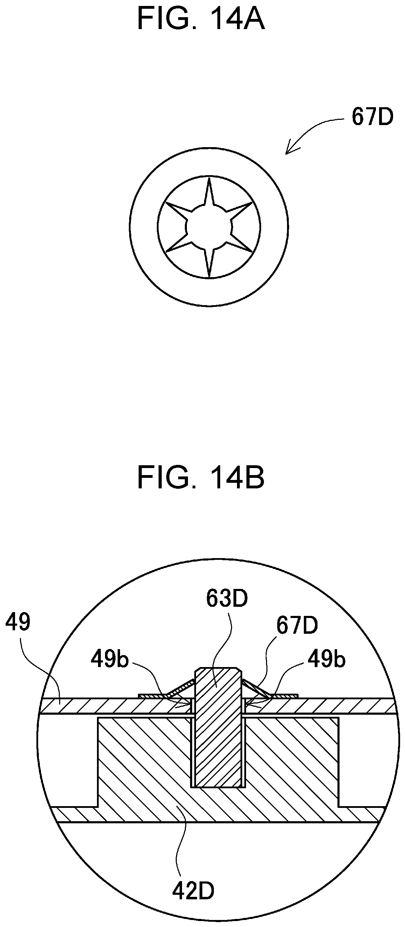

Alternatively, bush nut 67D may be used as illustrated in the plan view of Fig. 14A. In this case, coupling part 63D of sub-holder 42D is formed in a pin shape as illustrated in the cross-sectional view of Fig. 14B. Then, in a state where the pin is inserted into elongated hole 49b of duct plate 49 from the lower surface, bush nut 67D is engaged with the tip of the pin, and duct plate 49 is fixed so as to be sandwiched between bush nut 67D and sub-holder 42D.

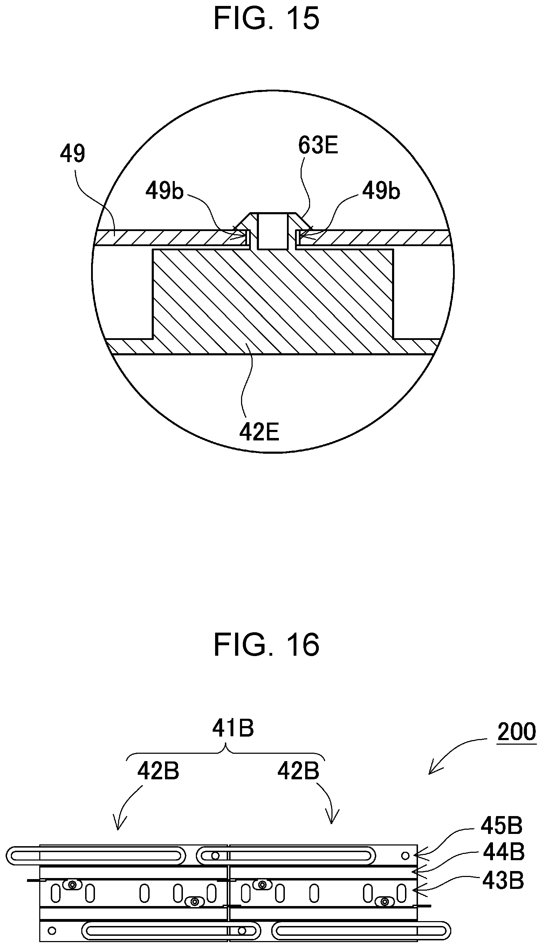

Alternatively, as illustrated in the cross-sectional view of Fig. 15, coupling part 63E of sub-holder 42E may be formed in a claw shape. Also in this case, by inserting claw-like coupling part 63E from the lower surface side of elongated hole 49b of duct plate 49 and locking claw-like coupling part 63E, the duct plate 49 can be fixed so as to be sandwiched by claw-like coupling part 63E.

In the example of Fig. 3 and the like, the joint interface between the divided sub-holders 42 is formed in a stepwise shape. As a result, the sub-holders 42 can be easily positioned at the joint interface, and bus bar guide parts 45 in which bus bars 50 are arranged can be linearly connected between sub-holders 42 as illustrated in Figs. 6 and 7. As shown in Fig. 8, the joint interface formed in a stepwise shape is formed so as to divide a part of gas introduction ports 48b into two.

In addition, a locking structure may be provided in order to maintain the connection state between sub-holders 42. In the examples of Figs. 8 and 9, the locking structure includes frames 65 and pins 66 inserted into the frames 65. Each frame 65 is formed in a track shape, a slit is provided inside, and each pin 66 can be inserted into the slit and moved. The inner diameter of the slit is designed to match the outer diameter of the pin 66 or to be slightly larger than the outer diameter in consideration of a margin.

Since the amount of movement between sub-holders 42 is small, frames 65 do not need to be provided over the entire length of sub-holders 42, and may be provided by a length that can cover the distance pins 66 move.

### (Overlapping part 47)

At the joint interface where bus bar holder 41 is divided into sub-holders 42, it is preferable to prevent a gap by overlapping the joint interface so that gas does not leak from the joint interface between sub-holders 42 even if the gas discharge valve of any battery cell opens. Therefore, bus bar holder 41 forms overlapping parts 47 each extending from one of the opposing surfaces of sub-holders 42 facing each other toward the other opposing surface. Each overlapping part 47 closes a gap between sub-holders 42 when the battery stack is expanded and sub-holders 42 are separated from each other.

In the example illustrated in the exploded perspective view of Fig. 5 and the enlarged exploded perspective view of the main part of Fig. 11, overlapping parts 47 are formed in wall parts 46 at the joint interface. Each overlapping part 47 is configured to extend from the side surface of one of wall parts 46 abutting on each other at the joint interface and abut on side surface of other wall part 46. As a result, even when sub-holders 42 are abutted with each other, overlapping parts 47 are positioned on the side surface of wall parts 46 without hindering abutment between sub-holders 42. In addition, when sub-holders 42 are separated from each other, this gap can be closed by overlapping parts 47.

Overlapping parts 47 are preferably provided on sides of wall parts 46 facing gas duct 43. As a result, it is possible to eliminate the protrusion on wire passing part 44 and to avoid a situation of hindering the arrangement of the harness and the like. However, the overlapping parts may be provided on surface sides of the wall parts which is the outer side of the gas duct. As a result, it is possible to avoid a situation in which the discharge of the gas is hindered by the end surfaces of the overlapping parts.

The overlapping parts may be provided not only on the wall parts but also on, for example, duct surfaces of sub-holders constituting a bottom surface of the gas duct.

### [Second exemplary embodiment]

Furthermore, in the examples of Figs. 8 and 9, the joint interface has a stepwise shape, but in the present invention, the joint interface between the sub-holders is not limited to this shape, and may have another shape. For example, in bus bar holder 41B of power source device 200 according to a second exemplary embodiment illustrated in Fig. 16, the joint interface between sub-holders 42B is linear. By forming the linear joint interface, there is a concern that sub-holders 42B are misaligned in the width direction (the up-down direction in Fig. 16). However, by providing the above-described locking structure, it is possible to stably change the interval between sub-holders 42B while maintaining gas duct 43B, wire passing part 44B, and bus bar guide part 45B in a linear shape.

Further, in the above examples, examples in which bus bar holder 41 is divided into two sub-holders 42 have been described, but it is needless to say that the number of divided sub-holders is not limited to two, and may be three or more in the present invention.

Power source device 100 described above can be used as a power source for a vehicle that supplies electric power to a motor that causes an electric vehicle to travel. As an electric vehicle equipped with power source device 100, an electric vehicle such as a hybrid automobile or a plug-in hybrid automobile that travels with both an engine and a motor, or an electric automobile that travels only with a motor can be used, and the power source device is used as a power source for these vehicles. An example will be described in which a large-capacity, high-output power source device in which a large number of power source devices 100 described above are connected in series or in parallel to obtain electric power for driving an electric vehicle and a necessary controlling circuit is further added is constructed.

### (Power source device for hybrid vehicle)

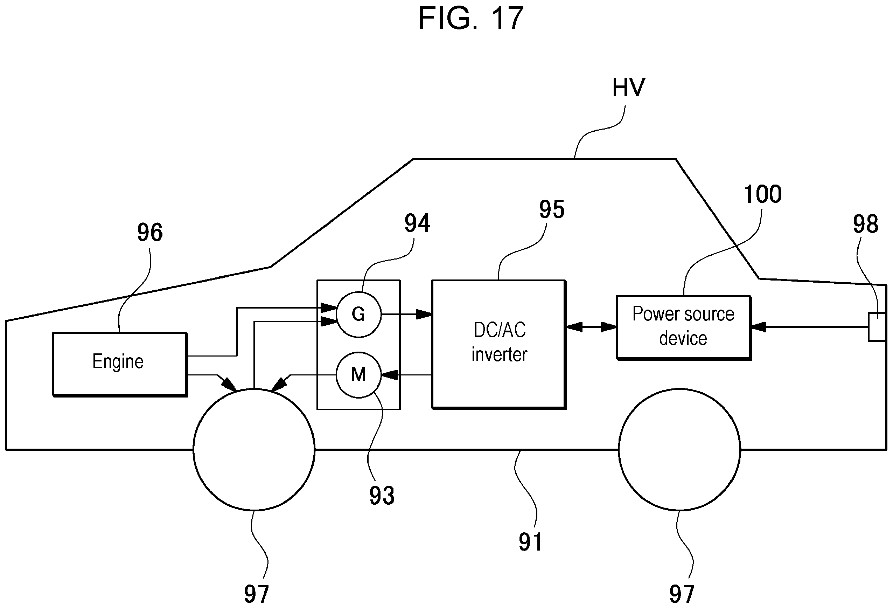

Fig. 17 illustrates an example in which the power source device 100 is mounted on the hybrid automobile that travels by both the engine and the motor. Vehicle HV on which power source device 100 shown in this figure is mounted includes vehicle body 91, engine 96 and motor for travelling 93 that cause this vehicle body 91 to travel, wheels 97 driven by this engine 96 and motor for travelling 93, power source device 100 that supplies electric power to motor 93, and power generator 94 that charges the battery of power source device 100. Power source device 100 is connected to motor 93 and power generator 94 via DC/AC inverter 95. Vehicle HV travels using both motor 93 and engine 96 while charging and discharging the battery of power source device 100. Motor 93 is driven in a region where engine efficiency is low, for example, during acceleration or low-speed traveling, and causes the vehicle to travel. Motor 93 is driven by electric power supplied from power source device 100. Power generator 94 is driven by engine 96 or driven by regenerative braking acquired when braking is applied to the vehicle, and charges the battery of power source device 100. As shown in Fig. 17, vehicle HV may include charging plug 98 to charge power source device 100. Connecting charging plug 98 to an external power source enables charging of power source device 100.

### (Power source device for electric automobile)

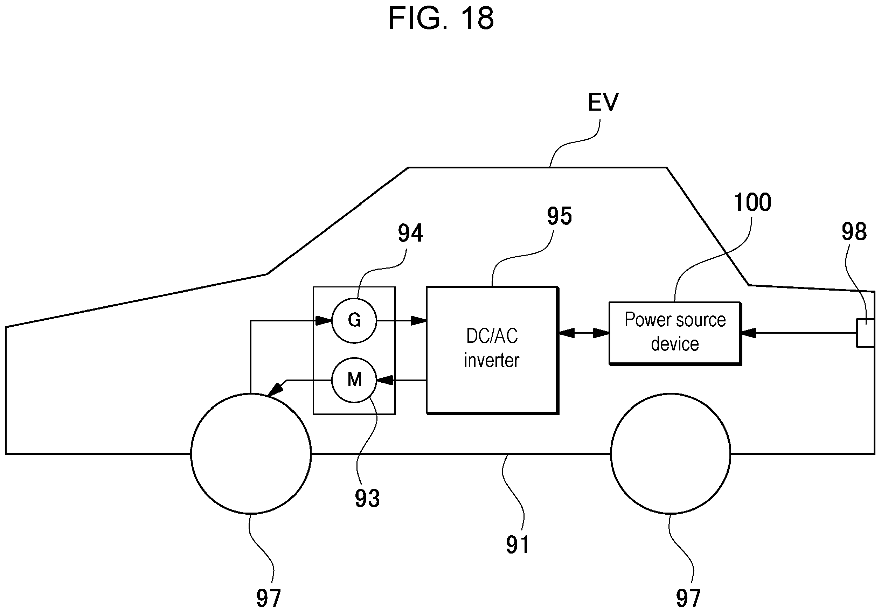

Fig. 18 shows an example in which a power source device 100 is mounted on an electric automobile that travels only by a motor. Vehicle EV on which power source device 100 shown in this figure is mounted includes vehicle body 91, motor for travelling 93 that causes this vehicle body 91 to travel, wheels 97 that are driven by this motor 93, power source device 100 that supplies electric power to this motor 93, and power generator 94 that charges the battery of this power source device 100. Power source device 100 is connected to motor 93 and power generator 94 via DC/AC inverter 95. Motor 93 is driven by electric power supplied from power source device 100. Power generator 94 is driven by the energy at the time of applying regenerative braking to vehicle EV and charges the battery of power source device 100. Vehicle EV includes charging plug 98, and power source device 100 can be charged by connecting charging plug 98 to the external power source.

### (Power source device for power storage device)

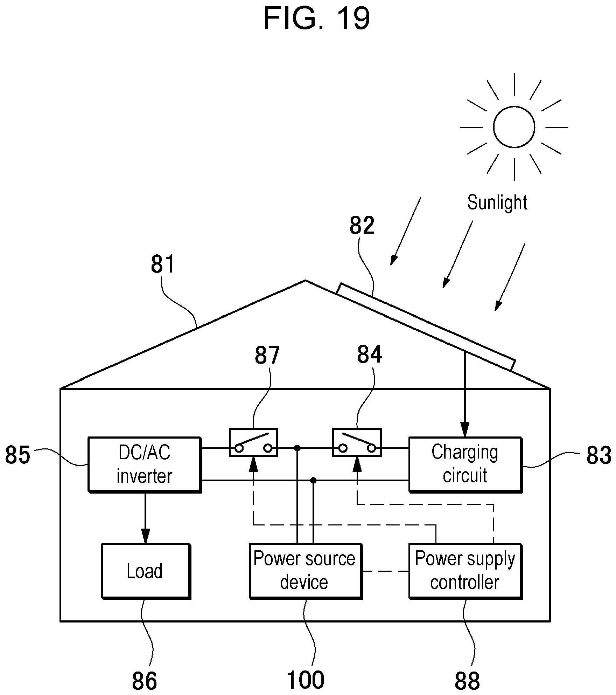

Further, the present invention does not limit the application of the power source device to a power source for a motor that causes a vehicle to travel. The power source device according to the exemplary embodiment can be used as a power source for a power storage device that performs power storage by charging a battery with electric power generated by solar power generation, wind power generation, or other methods. Fig. 19 illustrates a power storage device that charges and stores the batteries of power source device 100 with solar battery 82.

The power storage device illustrated in Fig. 19 charges the batteries of power source device 100 with electric power generated by solar battery 82 arranged on a roof, a rooftop, or the like of building 81 such as a house or a factory. This power storage device charges the battery of power source device 100 via charging circuit 83 using solar battery 82 as a charging power source, and then supplies electric power to load 86 via DC/AC inverter 85. Thus, this power storage device includes a charge mode and a discharge mode. In the power storage device shown in the figure, DC/AC inverter 85 is connected to power source device 100 via discharging switch 87 and charging circuit 83 is connected to power source device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power source device 100. When charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power source device 100 to load 86. When necessary, the power supply controller can supply electric power to load 86 and charge power source device 100 simultaneously by turning on charging switch 84 and turning on discharging switch 87.

Although not illustrated, the power source device can also be used as a power source of a power storage device that performs power storage by charging a battery using midnight electric power at night. The power source device that is charged with midnight electric power is charged with the midnight electric power that is surplus electric power generated by a power station, and outputs the electric power during the daytime when an electric power load increases, which can limit peak electric power during the daytime to a small value. The power source device can also be used as a power source charged with both output of a solar battery and the midnight electric power. This power source device can efficiently perform power storage using both electric power generated by the solar battery and the midnight electric power effectively in consideration of weather and electric power consumption.

The power storage system as described above can be suitably used in applications including a backup power source device that can be mounted on a computer server rack, a backup power source device for wireless base stations for cellular phones and the like, a power storage device combined with a solar battery such as a power storage power source for homes and factories or a power source for street lights, and a backup power source for traffic lights and traffic indicators on roads.

### INDUSTRIAL APPLICABILITY

The power source device according to the present invention and a vehicle and a power storage device equipped with the power source device are suitably used as a large current power source used for a power source of a motor for driving an electric vehicle such as a hybrid vehicle, a fuel cell vehicle, an electric automobile, or an electric motorcycle. Examples of the power source device include a power source device for a plug-in hybrid electric automobile and a hybrid electric automobile that can switch between an EV traveling mode and an HEV traveling mode, an electric automobile, or the like. The power source device can also be appropriately used for the applications including a backup power source device that can be mounted on a computer sever rack, a backup power source device for wireless base stations of cellular phones and the like, a power storage device combined with a solar battery such as a power storage power source for homes and factories or a power source for street lights, and a backup power source for traffic lights.

### REFERENCE MARKS IN THE DRAWINGS

100, 200, 900: power source device
1: battery cell
1X: terminal surface
1a: outer covering can
1b: sealing plate
1c: gas discharge valve
2: electrode terminal
10: battery stack
15: fastening member
15a: fastening main surface
15d: bent piece
15f: bolt
16: insulating spacer
17: end surface spacer
20: end plate
30: insulating sheet
31: flat plate
32: bent cover
40: cover assembly
41, 41B: bus bar holder
42, 42B, 42C, 42D, 42E: sub-holder
43, 43B: gas duct
44, 44B: wire passing part
45, 45B: bus bar guide part
46: wall part
47: overlapping part
48: duct surface
48b: gas introduction port
49: duct plate
49b: elongated hole
50: bus bar
51: bus bar main body
52: bus bar branch part
60: boss
61: support surface
62: annular frame
63, 63B, 63C, 63D, 63E: coupling part
64: insert nut
65: frame
66: pin
67: bolt
67B: anchor
67D: bush nut
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
901: battery cell
901c: gas discharge valve
902: electrode terminal
903: end plate
904: bind bar
910: battery stack
941: bus bar holder
942: sub-holder
949: duct plate
967: bolt
HT: heater
HV, EV: vehicle

## Claims

1. A power source device comprising:
a battery stack including a plurality of battery cells stacked, each of the plurality of battery cells including a gas discharge valve that opens when an internal pressure of an outer covering can of the battery cells increases and an electrode terminal disposed on an upper surface of the each of the battery cells;
a plurality of bus bars that connect a plurality of electrode terminals of the plurality of battery cells to each other;
a bus bar holder that holds the plurality of bus bars; and
a duct plate disposed on an upper surface of the bus bar holder and defining a gas duct,
wherein the bus bar holder is divided into a plurality of sub-holders,
the duct plate includes an elongated hole coupled to one of the plurality of sub-holders,
each of the plurality of sub-holders disposed a support surface longer than the elongated hole and a coupling part opened in the support surface, a support surface being at a position corresponding to the elongated hole, and
the duct plate is connected to the coupling part through the elongated hole to couple the plurality of sub-holders and the duct plate in a state where the duct plate is placed on the support surface with the duct plate straddling the plurality of sub-holders divided.

2. The power source device according to Claim 1, wherein
each of the plurality of the sub-holders includes a boss in the gas duct, and
the support surface is disposed on an upper surface of the boss.

3. The power source device according to Claim 2, wherein an annular frame inserted into the elongated hole protrudes around the coupling part of the support surface.
with the above configuration, the annular frame is inserted into the elongated hole to function as a guide for sliding a screwed part along the elongated hole.

4. The power source device according to Claim 2 or 3, wherein an insert nut is embedded in the boss.

5. The power source device according to any one of Claims 1 to 4, wherein the support surface is disposed in a track shape.

6. The power source device according to any one of Claims 1 to 5, wherein an interface between the plurality of sub-holders facing each other is disposed in a stepwise shape in plan view.

7. The power source device according to any one of Claims 1 to 6, wherein the bus bar holder includes an overlapping part that extends from one of opposing surfaces of the plurality of sub-holders facing each other toward another opposing surface, and closes a gap between the plurality of sub-holders.

8. The power source device according to any one of Claims 1 to 7, wherein the bus bar includes
a bus bar main body extended in a prismatic shape, and
a bus bar branch part extending from the bus bar main body and connected to the electrode terminal.

9. The power source device according to any one of Claims 1 to 8, wherein the bus bar holder is made of polybutylene terephthalate.

10. The power source device according to any one of Claims 1 to 9, wherein the duct plate is made of stainless used steel (SUS) or iron.

11. A vehicle including the power source device according to any one of Claims 1 to 10, the vehicle comprising:
the power source device;
a motor for traveling supplied with electric power from the power source device;
a vehicle body equipped with the power source device and the motor; and
a wheel that is driven by the motor to cause the vehicle body to travel.

12. A power storage device including the power source device according to any one of Claims 1 to 10, the power storage device comprising:
the power source device; and
a power supply controller that controls charging to and discharging from the power source device,
wherein the power supply controller enables charging to the plurality of battery cells with electric power from an outside, and controls charging to the plurality of battery cells.
